# EUROPÄISCHE PATENTANMELDUNG

(11) **EP 2 846 150 A1**
(43) Veröffentlichungstag der Anmeldung: **11.03.2015**
(21) Anmeldenummer: 14181538.1
(22) Anmeldetag: 20.08.2014
(51) Int. Cl.: G01N 21/47

(54) **Kalibrierelement und Verfahren zur Herstellung eines solchen Kalibrierelements**

(30) Priorität: 06.09.2013 AT 505602013
(71) Anmelder: DiTest Fahrzeugdiagnose GmbH, 8020 Graz (AT)
(72) Erfinder: Schmidt, Volker, 8212 Pischelsdorf (AT); Reil, Frank, 8043 Graz (AT); Bergmann, Alexander, 8052 Graz (AT); Axmann, Harald, 8501 Lieboch (AT); Lukesch, Walter, 8041 Graz (AT); Kohl, Anton, 8263 Großwilfersdorf (AT)
(74) Vertreter: Patentanwälte Pinter & Weiss OG

(57) **Zusammenfassung**

Um ein Kalibrierelement mit einer definierten Streulichtverteilung einfach herstellen zu können, ist ein transparenter Behälter (30) vorgesehen, der mit einer Flüssigkeit (31) gefüllt ist, wobei in der Flüssigkeit (31) Streupartikel (32) verteilt angeordnet sind und die Dichte der Flüssigkeit (31) an die Dichte der Streupartikel (32) angepasst ist.

## Beschreibung

Die gegenständliche Erfindung betrifft ein Kalibrierelement, vorzugsweise für ein Streulicht-messgerät, und ein Verfahren zur Herstellung eines solchen Kalibrierelements.

Zur Messung von Partikeln in Abgasen werden häufig Streulichtverfahren eingesetzt. Dabei wird das Abgas durch ein Messvolumen geleitet, in das Licht, z.B. Laserlicht, eingestrahlt wird. Das Licht wird an den Partikeln gestreut und das gestreute Licht wird von einer Anzahl von in vorgegebener und fixer Position angeordneten Sensoren erfasst. Die erfasste Streu-lichtintensität ist ein Maß für die Partikelmassenverteilung im Abgas.

Damit ein solches Messverfahren eingesetzt werden kann, muss das Streulichtmessgerät kalibriert werden, um eine ordnungsgemäße Funktion, also eine richtige Messung, sicherzustellen. Dazu werden in der Regel Streukörper verwendet, die aus einem festen Trägermate-rial und darin eingebetteten Streuzentren in Form von Feststoffpartikeln bestehen. Zur Herstellung solcher Streukörper wird oftmals ein flüssiges Trägermaterial mit Feststoffpartikeln gemischt, sodass die Feststoffpartikel möglichst gleichmäßig und homogen im Trägermateri-al verteilt sind. Danach wird das flüssige Trägermaterial ausgehärtet, um die Feststoffpartikel in Ihrer Lage zu fixieren und um eine definierte Streuung am Streukörper zu erzeugen. Solche Streukörper sind z.B. aus der US 3,234,846 A, der US 4,291,981 A oder der EP 658 264 B1 bekannt.

Aus der DE 10 2010 002 423 A1 ist eine Vorrichtung und ein Verfahren zum Kalibrieren eines Streulichtmessgerätes offenbart, in der ein quaderförmiges Kalibrierelement verwendet wird, das einen Streukörper aus in einem festen Trägermaterial eingebetteten Streuzentren aufweist. Die Streuzentren weisen eine definierte Größenverteilung und einen definierten Abstand zueinander auf, um eine definierte Verteilung und Intensität des davon erzeugten Streulichtes zu erzielen. Weiters beschreibt die DE 10 2010 002 423 A1 einen Absorber in Form einer getönten Schicht, die am Lichteintritt und/oder am Lichtaustritt angeordnet werden kann, um eine Dämpfungswirkung zu erzielen und eine gewünschte Streulichtintensität einzustellen. Zwischen Streukörper und getönter Schicht gibt es dadurch am Lichtaustritt eine ebene Grenzschicht, an der es zur Brechung des Streulichtes kommt. Die Dämpfungswirkung eines Absorbers hängt aber vom Weg ab, den das Licht im Absorber zurücklegt. Je länger der Weg, umso stärker wird das Licht gedämpft. Aufgrund der Brechung und der Dämpfungswirkung ist die Streulichtverteilung am Lichtaustritt aus dem Streukörper nicht homogen verteilt. Das Messergebnis ist damit abhängig von der relativen Position der Sensoren zum Streukörper, was die Kalibrierelement auch empfindlich auf Lageungenauigkeiten von Streukörper und/oder Sensoren macht.

Die EP 2 600 139 A1 zeigt ein Kalibrierelement mit einem zylindrischen, festen Streukörper mit eingebetteten Streuzentren, der von einem zylindrischen Absorberkörper konzentrisch umgeben wird. Damit soll eine möglichst isotrope Streulichtverteilung erzielt werden. Die Streuzentren sind im festen Streukörper ortsfest eingebettet, weshalb immer die gleichen Streuzentren im Streukörper und immer dieselben Punkte der Streuzentren beleuchtet werden. Eine allfällige Inhomogenität der Streuzentren im Streukörper, sei es in der Verteilung oder Größe der Streuzentren, macht sich dabei als störende Abweichung in der resultierenden Streulichtverteilung, z.B. als Streulichtkonzentration, bemerkbar, was insbesondere bei der Kalibrierung unerwünscht ist.

Es ist daher eine Aufgabe der gegenständlichen Erfindung, ein einfach herstellbares Kalibrie-relement und ein Verfahren zur Herstellung eines solchen Kalibrierelements anzugeben, das eine definierte Streulichtverteilung gewährleistet.

Diese Aufgabe wird erfindungsgemäß durch ein Kalibrierelement gelöst, das einen transparenten Behälter aufweist, der mit einer Flüssigkeit gefüllt ist, wobei in der Flüssigkeit Streu-partikel verteilt angeordnet sind und die Dichte der Flüssigkeit an die Dichte der Streupartikel angepasst ist. Zur Herstellung wird eine Flüssigkeit als Gemisch einer Grundflüssigkeit und zumindest einer Mischflüssigkeit bereitgestellt und es werden Streupartikel in die Flüssigkeit eingerührt und die Dichte der Flüssigkeit durch das Mischungsverhältnis zwischen Grund-flüssigkeit und der zumindest einen Mischflüssigkeit an die Dichte der Streupartikel angepasst und das Gemisch mit den Streupartikeln in einen transparenten Behälter des Kalibrie-relements gefüllt. Die Streupartikel können in der Flüssigkeit sehr homogen verteilt werden, um eine definiert einstellbare Streulichtverteilung sicherzustellen. Durch die Anpassung der Dichten kann eine Sedimentation oder eine Entmischung einfach verhindert werden. Durch die Einbettung der Streupartikel in einer Flüssigkeit kommt es aufgrund von kleinsten Bewegungen, wie z.B. der Brown'schen Molekülbewegung in Flüssigkeiten, darüber hinaus zu kleinen zufälligen Änderungen in der Streulichtverteilung, was hilft, störende Fluktuation in der entstehenden Streulichtverteilung heraus zu mitteln.

Bevorzugt wird als Grundflüssigkeit Glycerol und als Mischflüssigkeit Wasser verwendet, da diese Flüssigkeiten gut mischbar sind und deren Mischung im Anwendungstemperaturbereich stabil bleibt. Dazu werden als Streupartikel bevorzugt Polystyrolkügelchen verwendet, deren Dichte Anwendungstemperaturbereich gut zu den Dichten von Glycerol und Wasser passen.

Um die Streulichtintensität beeinflussen zu können, ist vorteilhaft an der Innenwand und/oder Außenwand des Behälters ein Absorber angeordnet. Dazu kann der Absorber als Beschichtung auf die Innenwand und/oder Außenwand des Behälters aufgebracht sein, was es ermöglicht, unterschiedlichste Materialien zu verwenden, die auch zusätzliche Funktionen, wie z.B. die Ausbildung einer mechanischen Schutzschicht, übernehmen können.

Vorteilhaft könnte auch der Behälter selbst als Absorber ausgeführt sein, was den Aufbau und die Herstellung des Kalibrierelements vereinfacht.

Die gegenständliche Erfindung wird nachfolgend unter Bezugnahme auf die Figuren 1 bis 3, die beispielhaft und schematisch vorteilhafte Ausgestaltungen der Erfindung zeigen, erläutert. Dabei zeigt
Fig. 1 ein Streulichtmessgerät in einer Seitenansicht,
Fig. 2 ein Streulichtmessgerät mit Kalibrierelement in einer Querschnittsebene und
Fig. 3 ein erfindungsgemäßes Kalibrierelement.

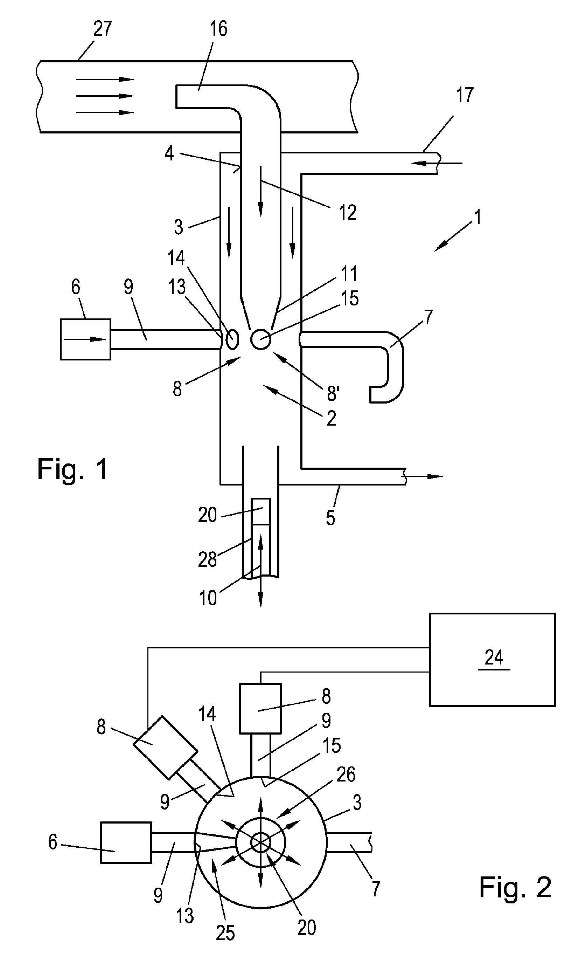

Das in Fig. 1 und 2 dargestellte Streulichtmessgerät 1 ist beispielsweise zur kontinuierlichen Messung der Partikelkonzentration im Abgas von Brennkraftmaschinen geeignet, wobei dieses Abgas über eine Sonde 16, beispielsweise im Auspuff 27 am Auspuffende der Brennkraftmaschine, entnommen und dem Streulichtmessgerät 1 über eine Zuleitung 4 als Messgas 12 zugeführt werden kann. Das Streulichtmessgerät 1 besteht im Wesentlichen aus einer ein Messvolumen 2 umgebenden Messkammer 3, welche eine Zuleitung 4 und Ableitung 5 für das partikelbeladene Messgas 12 zum bzw. vom Messvolumen 2 und eine Lichtquelle 6, wie z.B. einen Laser, mit zugehöriger, im Strahlweg gegenüberliegender Lichtsenke 7 aufweist. Weiters ist zumindest eine Detektoranordnung 8 integriert, die das aufgrund der Partikel im Messgas 12 erzeugte Streulicht 26 in der Ebene des Lichtstrahls 25, bzw. in einer Querschnittsebene der Messkammer 3, erfasst. Ebenso können in gleicher Weise um Winkel versetzt noch weitere Detektoranordnungen 8' angeordnet sein, wie in Fig. 2 besser ersichtlich. D.h., dass die Detetektoranordnung 8 bzw. 8', oder zumindest die optischen Fenster 14, 15 in der Messzelle 3, in der Ebene des Lichtstrahls 25, bzw. in einer Querschnittsebene der Messkammer 3, angeordnet sind. Die Lichtquelle 6 und/oder die Detektoranordnung(en) 8, 8' kann / können auch direkt an der Messkammer 3 angeordnet sein und nicht wie hier dargestellt in einem Abstand dazu. Die optischen Fenster 13, 14 und 15 können dazu als Linsenoptikvorsätze am Ende von Lichtleitern 9 ausgebildet sein, welche Lichtquelle 6 und Detektoranordnung 8, 8' mit den optischen Fenstern 13, 14, 15 verbinden, wodurch ein Temperaturein- bzw. -austrag verhindert wird.

Das von den Detektoranordnungen 8, 8' erzeugte Messsignal wird an eine Auswerteeinrichtung 24 weitergeleitet, die aus den Messsignalen in an sich bekannter Weise eine Partikel-konzentration im Messgas 12 ermittelt.

Über eine Leitung 17 kann der Messzelle 3 zusätzlich auch ein Spülgas, z.B. gefiltertes Abgas oder gefilterte Luft, zugeführt werden, wobei das Spülgas das Messvolumen 2 bzw. das Messgas 12 in der Messzelle 3 umgibt. Das Spülgas strömt hier zwischen Messgas 12 und der Wand der Messzelle 3. Damit kann verhindert werden, dass partikelbeladenes Messgas 12 mit den optischen Elementen (Lichtleiter 9, optische Fenster 13, 14, 15) in der Messzelle 3 in Kontakt gerät, was zu einer Verschmutzung der optischen Elemente und damit zu einer Beeinträchtigung des Messergebnisses führen könnte.

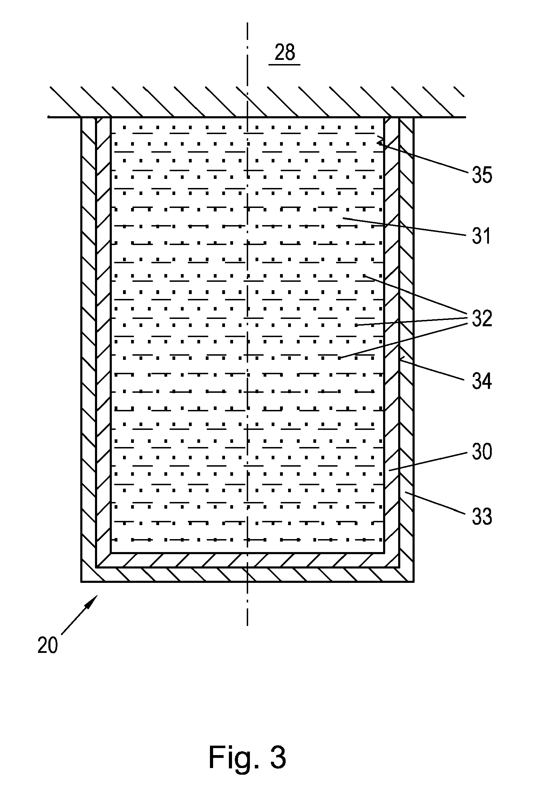

In der Messkammer 3 kann weiters ein erfindungsgemäßes Kalibrierelement 20 vorgesehen sein, das an einem Haltelement 28 angeordnet sein kann, um das Kalibrierelement 20 zu halten und in die Messkammer 3 einführen zu können. Dieses Kalibrierelement 20 ist bedarfsweise mittels einer hier nicht dargestellten Vorrichtung entlang des Pfeiles 10 in die Messkammer 3 und in den Strahlgang des Lichtstrahles 25 der Lichtquelle 6 einbringbar, womit das Streulichtmessgerät 1 mittels der so am Kalibrierelement 20 erzeugten definierten Streulichtintensität des Streulichts 26 kalibrierbar ist. Das Kalibrierelement 20 wird nachfolgend unter Bezugnahme auf die Fig. 3 beschrieben.

Das Kalibrierelement 20 besteht aus einem transparenten Behälter 30, z.B. ein Glasbehälter, in dem eine Flüssigkeit 31 eingefüllt ist, wobei in der Flüssigkeit 31 eingemischte Streuparti-kel 32 frei schwebend enthaltend sind. Der Behälter 30 liegt vorzugsweise in Form eines Zylinders vor, der beidseitig verschlossen ist.

Um Sedimentation und Entmischung der Streupartikel 32 in der Flüssigkeit 31 zu verhindern, ist die Dichte der Flüssigkeit 31 an die Dichte der Streupartikel 32 angepasst und im Wesentlichen gleich.

Bevorzugt wird für die Flüssigkeit 31 eine höher- oder hochviskose Flüssigkeit verwendet, wie z.B. Glycerol (C₃H₈O₃) mit einer Dichte von 1.26 g/cm³ bei 20°C und mit einer Viskosität von 1480 mPa·s bei 20°C (im Vergleich hat Wasser eine Viskosität von 1 mPa·s bei 20°C). Als Streupartikel 32 werden z.B. Kügelchen aus Polystyrol, vorzugsweise mit einem Durchmesser im Zehntel Mikrometerbereich, z.B. 0,8µm. Festes Polystyrol hat eine Dichte von 1.04 - 1.09 g/cm³.

Um die Dichte der Flüssigkeit 31 an die Dichte der Streupartikel 32 anzupassen, kann die Flüssigkeit 31 auch aus einem Gemisch aus zwei oder mehr Flüssigkeiten bestehen, wobei solche Flüssigkeiten gewählt werden, die mischbar sind und deren Mischung im Anwendungstemperaturbereich stabil bleibt. Glycerol kann z.B. mit Wasser, mit der Dichte von 0.998203 g/cm³ bei 20°C, gemischt werden, um die Dichte der Flüssigkeit 31 an die Dichte der Streupartikel 32 anzupassen.

Zur Herstellung des Kalibrierelements 20 wird zuerst eine Grundflüssigkeit, z.B. Glycerol, mit einer Mischflüssigkeit, z.B. Wasser, gemischt, um eine bestimmte Dichte der Flüssigkeit 31 einzustellen. Danach werden die gewünschten Streupartikel 32 in der gewünschten Konzentration zugemischt und möglichst homogen in der Flüssigkeit 31 verteilt, z.B. durch langes Rühren. Das derart entstandene Flüssigkeits 31 - Streupartikel 32 Gemisch wird dann in den einseitig verschlossenen Behälter 30 gefüllt, sodass dieser vollständig aufgefüllt ist. Danach wird der Behälter 30 auch an der zweiten Stirnseite verschlossen, z.B. durch einen geeigneten Verschluss oder indem der Behälter 30 mit dem Halteelement 28 verbunden wird. Die Flüssigkeit 31 wird im Behälter 30 nicht ausgehärtet, sondern bleibt in flüssiger Form.

Nachdem die Dichte temperaturabhängig ist, stellt sich das gewünschte Dichtegleichgewicht zwischen Flüssigkeit 31 und Streupartikel 32 nur innerhalb eines bestimmten Temperaturbereichs ein. Das Kalibrierelement 30 ist daher natürlich bei einer bestimmten Temperatur zu lagern und einzusetzen. Nachdem die Messkammer eines Streulichtmessgerätes 1 in der Regel über Heizelemente beiheizbar ist, um die Temperatur bei der Messung zu regeln, stellt das aber in der Praxis kein Problem dar. Daher wird das Dichtegleichgewicht für die Temperatur eingestellt, bei der gewöhnlich auch gemessen wird.

Weiters kann ein Absorber 33 vorgesehen sein, um die Streulichtintensität bedarfsweise zu verringern, indem durch den Absorber 33 ein bestimmter Absorptionsgrad für das Streulicht 30 eingestellt wird. Der Absorber 33 umgibt den Behälter 30 (wie in Fig.3) oder ist an der Innenwand 35 und/oder der Außenwand 34 des Behälters 30 angeordnet. Im Falle eines zylindrischen Behälters 30 ist der Absorber 33 konzentrisch zum Behälter 30 angeordnet. Der Absorber 33 kann ein eigenes Bauteil sein, z.B. ein weiterer Behälter, z.B. ein Glaszylinder, oder kann auch nur in Form einer Beschichtung, vorzugsweise mit einer Dicke im µm-Bereich, direkt auf der Innenwand 35 oder der Außenwand 34 des Behälters 30 aufgebracht sein. Der Absorber 33 kann aus unterschiedlichen Materialien hergestellt sein bzw. bestehen, z.B. aus molekularem Farbstoff, aus einer Kohlenstoffschicht, z.B. in diamantähnlicher oder polymerähnlicher Struktur, oder aus gefärbtem Glas. Im Falle eines außen am Behälter 30 liegenden Absorbers 33 kann diese auch als Schutzschicht des Behälters 30 gegenüber Zerkratzen oder anderen äußeren physikalischen oder chemischen Einflüssen ausgeführt sein, z.B. in Form einer Kohlenstoffschicht.

Es ist aber auch denkbar, den Absorber 33 zwischen zwei Behälter, z.B. dem innenliegen-den Behälter 30 und einem äußeren zweiten Behälter, einzuschließen, was den Absorber 33 einerseits schützt und andererseits auch flüssige Materialen als Absorber 33 ermöglicht.

Weiters ist es denkbar, keinen eigenen Absorber 33 vorzusehen, sondern den Behälter 30 selbst als Absorber auszuführen, z.B. in Form eines Behälters aus gefärbtem Glas.

Eines der wesentlichen Merkmale des erfindungsgemäßen Kalibrierelements 20 bei Verwendung eines Absorbers 33 ist die Auftrennung der optischen Funktionalität der Absorption und der Lichtstreuung. Die Streuung des Lichtes erfolgt an den in der Flüssigkeit 31 befindlichen Streupartikeln 32. Die weitestgehend absorptionsfreie Vielfachstreuung des Lichtes durch die Streupartikel 32 ergibt eine sehr gute Isotropie der Streulichtintensität des Streulichts 26 in der Ebene des einfallenden Lichtes. Die Flüssigkeit 31 ist vom Absorber 33 umgeben, der zur Einstellung der Streulichtintensität auf ein gewünschtes Maß dient.

Wenn das Kalibrierelement 20 vorteilhafterweise zylindrisch ausgeführt ist, wird die Grenzschicht zwischen Absorber 33 und Flüssigkeit 31 in konstanter Intensitäts- und Richtungseigenschaft vom Streulicht 26 getroffen. Im Weiteren wird durch die radial im Wesentlichen konstante Dicke der absorbierenden Schicht des Absorbers 33, Streulicht 26 in einer Querschnittsebene normal zur Längsachse des Kalibrierelements 20 winkelunabhängig in gleicher Intensität abgegeben. Eine Winkelabhängigkeit der Abschwächung des Streulichts 26 im Absorber 33 wird somit vermieden, da jeder Raumwinkelanteil des Streulichts 26 in etwa die gleiche Extinktion durch den Absorber 33 erfährt.

Die Abmessungen (Durchmesser oder Breite) des Innenraumes des Behälters 30 werden vorzugsweise groß im Verhältnis zum Durchmesser des auftreffenden Lichtstrahles 25 bzw. zum Lichtfokus gewählt, wobei die Abmessungen vorteilhaft mindestens zwei- bis dreimal so groß als der Durchmesser des Lichtstrahles 25, insbesondere fünf- bis zehnmal so groß, sind. Das erleichtert die Positionierung des Kalibrierelements 20 relativ zum Lichtstrahl 25.

Das Kalibrierelement 20 wird zur Kalibrierung so in das Streulichtmessgerät 1 eingebracht, dass der Lichtstrahl 25 von der Lichtquelle 6 im rechten Winkel zur Längsachse des Kalib-rierelements 20 auftrifft und so, dass der Lichtfokus möglichst zentral, also im Bereich der Längsachse, auf das Kalibrierelement 20 trifft. Das in der Ebene des einfallenden Lichtes abstrahlende Streulicht 26 wird von den Detektoranordnungen 8, 8' erfasst. Da sowohl die Streulichtintensität eingestellt werden kann und bekannt ist und mehrere Detektoranordnungen 8, 8' aufgrund der Eigenschaften des Kalibrierelements 20 dieselbe Streulichtintensität erfassen, können die Detektoranordnungen 8, 8' bzw. die damit verbundenen Auswerteelekt-ronik einfach kalibriert werden.

## Patentansprüche

1. Kalibrierelement mit einem transparenten Behälter (30), der mit einer Flüssigkeit (31) gefüllt ist, wobei in der Flüssigkeit (31) Streupartikel (32) verteilt angeordnet sind und die Dichte der Flüssigkeit (31) an die Dichte der Streupartikel (32) angepasst ist.

2. Kalibrierelement nach Anspruch 1, **dadurch gekennzeichnet, dass** als Flüssigkeit (31) ein Gemisch aus einer Grundflüssigkeit und zumindest einer Mischflüssigkeit vorgesehen ist.

3. Kalibrierelement nach Anspruch 2, **dadurch gekennzeichnet, dass** als Grundflüssig-keit Glycerol vorgesehen ist.

4. Kalibrierelement nach Anspruch 2, **dadurch gekennzeichnet, dass** als Mischflüssig-keit Wasser vorgesehen ist.

5. Kalibrierelement nach Anspruch 1, **dadurch gekennzeichnet, dass** als Streupartikel (32) Polystyrolkügelchen vorgesehen sind.

6. Kalibrierelement nach Anspruch 1, **dadurch gekennzeichnet, dass** an der Innenwand (35) und/oder Außenwand (34) des Behälters (30) ein Absorber (33) angeordnet ist.

7. Kalibrierelement nach Anspruch 6, **dadurch gekennzeichnet, dass** der Absorber (33) als Beschichtung auf die Innenwand (35) und/oder Außenwand (34) des Behälters (30) aufgebracht ist.

8. Kalibrierelement nach Anspruch 1, **dadurch gekennzeichnet, dass** der Behälter (30) als Absorber (33) ausgeführt ist.

9. Verfahren zum Herstellen eines Kalibrierelements (20), bei dem eine Flüssigkeit (31) als Gemisch einer Grundflüssigkeit und zumindest einer Mischflüssigkeit bereitgestellt wird und in die Flüssigkeit (31) Streupartikel (32) eingebracht werden und die Dichte der Flüssigkeit (31) durch das Mischungsverhältnis zwischen Grundflüssigkeit und der zumindest einen Mischflüssigkeit an die Dichte der Streupartikel (32) angepasst wird und das Flüssigkeit (31) mit den Streupartikeln (32) in einen transparenten Behälter (30) des Kalibrierelements (20) gefüllt wird.

10. Streulichtmessgerät mit einer Messkammer (3) und einer Lichtquelle (6), die einen Lichtstrahl (25) in die Messkammer (3) einstrahlt, und einem Kalibrierelement (20) nach einem der Ansprüche 1 bis 8, wobei das Kalibrierelement (20) zur Kalibrierung des Streulicht-messgeräts (1) in der Messkammer (3) im Strahlgang des Lichtstrahls (25) angeordnet ist und im Streulichtmessgerät (1) eine Detektoranordnung (8, 8') vorgesehen ist, die das am Kalibrierelement (20) gestreute Licht (30) erfasst.
